# EUROPÄISCHE PATENTSCHRIFT

(11) **EP 2 947 378 B1**
(45) Veröffentlichungstag und Bekanntmachung des Hinweises auf die Patenterteilung: **29.06.2016**
(21) Anmeldenummer: 14169528.8
(22) Anmeldetag: 22.05.2014
(51) Int. Cl.: F21S 8/10, F21V 8/00

(54) **Lichtleiter für eine Fahrzeugbeleuchtungseinheit**
Optical light guide for a vehicle lighting unit
Guide de lumière pour un éclairage de véhicule

(43) Veröffentlichungstag der Anmeldung: 25.11.2015
(73) Patentinhaber: SMR Patents S.à.r.l., 1653 Luxembourg (LU)
(72) Erfinder: FRITZ, Daniel, 70374 Stuttgart (DE); HÖBER, Heiko, 73730 Esslingen (DE)
(74) Vertreter: Weber-Bruls, Dorothée

(56) Entgegenhaltungen:
- EP-A1- 2 450 726
- DE-A1-102007 035 021
- DE-A1-102010 018 028
- DE-A1-102011 103 200
- DE-A1-102011 106 595
- DE-U1-202011 051 503

## Beschreibung

Die vorliegende Erfindung betrifft einen Lichtleiter für eine Fahrzeugbeleuchtungseinheit, insbesondere eines Kraftfahrzeugs, eine Rückblickvorrichtung mit einem derartigen Lichtleiter, ein Verfahren zur Herstellung eines derartigen Lichtleiters sowie ein Kraftfahrzeug mit einer derartigen Rückblickvorrichtung und/oder mit einem derartigen Lichtleiter.

Aus dem Stand der Technik sind verschiedene Arten von Fahrzeugbeleuchtungseinheiten bekannt, wie beispielsweise Blinker, Front- und Heckscheinwerfer, Nebelscheinwerfer etc. Herkömmliche Blinker sind entweder an der Front oder am Heck des Fahrzeugs angebracht. Weitere Ausbildungen von Blinkern sind in die Außenspiegeleinheiten integriert. Diese zusätzlichen Blinker erfüllen eine Sicherheitsfunktion und werten das Fahrzeug unter ästhetischen Gesichtspunkten auf. Für die Spiegelblinker werden LEDs (Licht emittierende Dioden) eingesetzt und in zunehmendem Maße auch Lichtleiterstrukturen aus Plexiglas.

Ein nicht gattungsgemäßer Lichtleiter ist bekannt aus DE 20 2011 051 503 U1, bei dem ein Flachmaterial quer zur Lichtrichtung angeordnet ist.

Darüber hinaus sind nicht gattungsgemäße Lichtleiter aus EP 2 450 726 A1 und DE 10 2010 018 028 A1 bekannt, die kein optisch wirksames Flachmaterial umfassen, sondern bei denen eine Reflexionseinheit aus einer Vielzahl an Mikropartikeln gebildet ist.

Aus der gattungsgemäßen DE 10 2011 103 200 A1 ist ein Lichtfenster für Signalleuchten, insbesondere für Blinker in Außenspiegeln unter Verwendung einer optischen Folie bekannt. Dabei wird die optische Folie auf einer Seite mit einer Beschichtung angespritzt, wobei die Beschichtung einen Lichtleiter bildet. Die optische Folie umfasst Auskoppelstrukturen zum Auskoppeln des Lichts aus dem Lichtleiter. Das Lichtfenster wird dabei in einem einzigen Spritzgussschritt hergestellt, bei dem die Beschichtung auf die Folie aufgespritzt wird. Auf der Hohlformseite kann die Folie eine Schutzschicht aufweisen, damit die Folie beim Spritzgießen nicht beschädigt wird.

Beim Design von Blinkern und anderen Arten von Fahrzeugbeleuchtungseinheiten ist nicht nur auf Funktionalität zu achten sondern auch auf Wertigkeit und ästhetische Gestaltung. Es ist daher wünschenswert, ein einfaches Herstellungsverfahren zu schaffen, mit dem Lichtleiter für Fahrzeugbeleuchtungseinheiten hergestellt werden können, die Licht effizient auskoppeln und die zugleich ein ästhetisch ansprechendes Design bieten.

Eine Aufgabe einer Ausführungsform der Erfindung ist, einen Lichtleiter für eine Fahrzeugbeleuchtungseinheit zu schaffen, mit dem das Auskoppeln von Licht in geeigneter Weise auskoppelt und dabei einfach herstellbar ist.

Diese Aufgabe wird durch die unabhängigen Ansprüche gelöst. Vorteilhafte Weiterbildungsformen sind Gegenstand der abhängigen Ansprüche.

Die vorliegende Erfindung basiert auf der Erkenntnis, dass an der Grenzfläche zweier Medien unterschiedlicher Brechungsindizes Licht gebrochen und reflektiert wird. Bettet man ein Flachmaterial in einen lichtleitenden Körper ein, der einen unterschiedlichen Brechungsindex zu dem des Flachmaterials hat, so erhält man zwei Grenzflächen, an denen das Licht gebrochen und reflektiert wird. Dieser Lichteffekt kann nicht nur dazu genutzt werden, um das Licht aus dem lichtleitenden Körper auszukoppeln, sondern es verleiht dem so hergestellten Lichtleiter auch einen dreidimensionalen Tiefeneffekt. Ein in einen lichtleitenden Körper eingebettetes Flachmaterial ist besonders robust, da ihre beiden Oberflächen durch den lichtleitenden Körper geschützt sind und so nicht der Umgebung ausgesetzt sind. Somit lässt sich eine vielfältige Anzahl von Strukturen auf dem Flachmaterial realisieren, die das Licht effizient auskoppeln und aufgrund des dreidimensionalen optischen Effekts den Eindruck eines hochqualitativen Designs vermitteln. Der Lichtleiter lässt sich leicht produzieren, wenn als Fertigungsprozess eine zwei- oder mehrfache Hinterspritzung gewählt wird. Mit mehrfacher Hinterspritzung lassen sich auch Lichtleiter herstellen, bei denen mehrere Flachmateriale in dem lichtleitenden Körper eingebettet sind und damit den Flächenanteil der reflektierenden und lichtbrechenden Grenzfläche noch weiter erhöhen.

In der folgenden Beschreibung wird unter anderem ein Herstellungsverfahren mit einem Prozessschritt des Hinterspritzens einer Flachmaterial bzw. eines Flachmaterialhinterspritzens beschrieben. Beim Flachmaterialhinterspritzen wird ein Flachmaterial, die einen Aufdruck aufweisen kann, vorgeformt, beispielsweise im Thermoform-Prozess. Dieses Flachmaterial wird dann in ein Spritzgusswerkzeug eingelegt und mit Kunststoff hinterspritzt. Das Spritzgießen bezeichnet ein Urformverfahren, das in der Kunststoffverarbeitung eingesetzt wird. Dabei wird mit einer Spritzgießmaschine der jeweilige Werkstoff verflüssigt und in eine Spritzgussform, dem Spritzgusswerkzeug, unter Druck eingespritzt. Im Werkzeug geht der Werkstoff durch Abkühlung oder eine Vernetzungsreaktion wieder in den festen Zustand über und kann nach dem Öffnen des Werkzeuges als Fertigteil entnommen werden. Der Hohlraum des Werkzeuges bestimmt die Form und die Oberflächenstruktur des fertigen Teiles.

Die Aufgabe wird gelöst durch einen Lichtleiter für eine Fahrzeugbeleuchtungseinheit, mit mindestens einem lichtleitenden Körper, der Licht entlang mindestens einer Lichtrichtung leitet; und mit mindestens einem, insbesondere bandförmigen, optisch wirksamen Flachmaterial, das mit dem in den Körper geleiteten Licht wechselwirkt, um einen Lichteffekt zu erzeugen. Er zeichnet sich dadurch aus, dass das Flachmaterial mit seiner Längserstreckungsrichtung entlang der Lichtrichtung des lichtleitenden Körpers in den lichtleitenden Körper und von diesem zumindest quer zur Längserstreckungsrichtung vollständig umgeben eingebettet ist.

Der Vorteil eines solchen Lichtleiters ist, dass das Licht, das entlang der vorgesehenen Lichtrichtung geleitet wird, aufgrund der unterschiedlichen Struktur von Flachmaterial und lichtleitendem Körper, mit der Flachmaterial wechselwirkt und so einen wahrnehmbaren Lichteffekt erzeugt. Der Vorteil des eingebetteten Flachmaterials liegt darin, dass das Auskoppeln von Licht aus dem Lichtleiter verbessert ist, da zwei Oberflächen zur Verfügung stehen, an denen das Licht reflektiert und gebrochen wird. Ferner ist ein Abnutzungseffekt bei einem Lichtleiter mit eingebettetem Flachmaterial durch das Abschirmen gegenüber Umgebungseinflüssen reduziert. Ferner lässt sich eine solche eingebettete Struktur durch zweifache oder mehrfache Hinterspritzung leicht herstellen.

Gemäß einer Ausführungsform umfasst das Flachmaterial quer zur Längserstreckungsrichtung mindestens einen Vorsprung, insbesondere mehrere Vorsprünge, wie einen Aufdruck, insbesondere einen dreidimensionalen Aufdruck. Darüber hinaus kann der mindestens eine Vorsprung eine Verprägung umfassen. Der Vorteil eines Aufdrucks ist, dass er sich leicht herstellen lässt, bevor das Flachmaterial in den lichtleitenden Körper eingebettet wird. Der Aufdruck lässt sich flexibel ausführen, beispielsweise kann damit ein Logo des Herstellers oder einer sonstigen Person realisiert werden. Zusätzlich oder alternativ kann der Vorsprung auch so ausgeführt sein, dass er das durch den Körper geleitete Licht effizient auskoppelt, beispielsweise entlang einer vorgegebenen Abstrahlfläche, um so Straßenverkehrsvorschriften zu erfüllen oder dem Lichtleiter eine bestimmte Charakteristik zu verleihen.

Das Flachmaterial kann eine Folie umfassen.

Gemäß einer Ausführungsform umfasst der Lichteffekt einen dreidimensionalen Tiefeneffekt. Ein solcher dreidimensionaler Tiefeneffekt ist besonders auffällig, sticht ins Auge und verleiht dem Produkt, in dem der Lichtleiter integriert ist, den Eindruck einer besonderen Wertigkeit. Zugleich zeigt ein besonders ausgeprägter Tiefeneffekt eine starke Brechung des Lichts an der Flachmaterial und damit eine effiziente Auskopplung aus dem Lichtleiter.

Gemäß einer Ausführungsform ist der Lichteffekt mit einer Auskopplung des Lichts aus dem lichtleitenden Körper verbunden. Der Vorteil der Auskopplung des Lichts aus dem lichtleitenden Körper besteht darin, dass der Lichtleiter zur Beleuchtung genutzt werden kann. Je nach Ausführung des Flachmaterials tritt ein anderer Lichteffekt auf, der mit einer anderen Abstrahlcharakteristik des Lichtleiters verbunden ist. Die Abstrahlcharakteristik kann also durch bestimmte Strukturierung oder bestimmten Druck des Flachmaterials variiert werden. Damit lässt sich der Lichtleiter flexibel mit verschiedenen Arten von Lichtquellen in verschiedenen Fahrzeugtypen und -modellen einsetzen.

Gemäß einer Ausführungsform weisen das Flachmaterial und der lichtleitende Körper einen unterschiedlichen Brechungsindex auf, insbesondere ist das Flachmaterial transparent, halbtransparent und/oder opak ausgebildet. Der Vorteil des unterschiedlichen Brechungsindex liegt darin, dass damit verschiedene Abstrahlcharakteristiken, Beleuchtungseindrücke und Beleuchtungseffekte gezielt bewirkt werden können. Je nach dem Aussehen des Flachmaterials kommt es zu einem unterschiedlichen Erscheinungsbild des Lichtleiters. Der Lichtleiter lässt sich damit für verschiedene Typen von Beleuchtungen flexibel einsetzen.

Gemäß einer Ausführungsform ist das Flachmaterial mittig in dem lichtleitenden Körper angebracht. Dies hat den Vorteil, dass damit die Fertigung, beispielsweise mit einem Spritzgussverfahren vereinfacht wird, da der erste Spritzgussverfahrensschritt genauso ausgeführt werden kann wie der zweite Spritzgussverfahrensschritt. Außerdem ist eine mittige Anordnung des Flachmaterials mit einem besonderen Symmetrieeffekt verbunden, so dass das Licht auf beiden Seiten des Flachmaterials in etwa gleichmäßig den lichtdurchlässigen Körper durchläuft.

Gemäß einer Ausführungsform umfasst der lichtleitende Körper einen Spritzgusskörper, der auf das Flachmaterial gespritzt ist, insbesondere durch mehrfache Flachmaterialhinterspritzung. Der Vorteil darin liegt, dass der Lichtleiter mittels Spritzgussverfahren sehr leicht und effizient gefertigt werden kann. Bei zwei- oder mehrfacher Flachmaterialhinterspritzung entsteht so ein sehr robuster Spritzgusskörper, der das Licht in die gewünschte Richtung leiten kann.

Gemäß einer Ausführungsform umfasst das Flachmaterial mindestens eine quer zur Längserstreckungsrichtung erstreckte durchgehende Aussparrung, durch die das Licht von einer Seite des Lichtleiters hindurch auf eine andere Seite des Lichtleiters und/oder nach außen gelangen kann. Der Vorteil der Aussparung ist, dass damit eine besonders effiziente Durchmischung des in dem Lichtleiter geleiteten Lichts bewirkt werden kann, so dass das nach außen abgestrahlte Licht besonders homogen ist. Außerdem können damit verschiedene Lichtquellen, beispielsweise verschieden farbige Lichtquellen, effizient gemischt werden, so dass der Eindruck einer einheitlichen Lichtquelle entsteht.

Gemäß einer Ausführungsform ist das Flachmaterial dazu ausgelegt, das durch den Körper geleitete Licht zu homogenisieren. Dies hat den Vorteil, dass der Eindruck einer homogenen, gleichmäßigen Lichtquelle entsteht und das abgestrahlte Licht damit eine besonders gute Beleuchtung der angestrahlten Objekte bewirkt. Ein Blinker oder ein Rücklicht eines Fahrzeugs ist damit besonders leicht erkennbar oder ein Fahrer kann bei Verwendung einer solchen Lichtquelle als Frontscheinwerfer angestrahlte Objekte insbesondere bei Dunkelheit leicht erkennen.

Gemäß einer Ausführungsform weist der lichtleitende Körper eine längliche Form auf und die Lichtrichtung verläuft entlang einer Hauptachse des Körpers. Der Vorteil der länglichen Form liegt darin, dass der Körper als Lichtleiterband ausgeführt werden kann und damit an verschiedenen Stellen im Fahrzeug anbringbar ist, wie beispielsweise am Außenspiegel, an der hinteren Scheibe oder an vorderen und hinteren Blinkern im Kraftfahrzeug. Wenn die Lichtrichtung entlang der Hauptachse des Körpers verläuft, wird der lichtleitende Körper gut ausgestrahlt, so dass die Lichtverteilung gleichmäßig ist und von außen als homogene erleuchtete Fläche erscheint.

Gemäß einer Ausführungsform ist der lichtleitende Körper stab- oder scheibenförmig, insbesondere scheibenförmig und gekrümmt ausgebildet. Dies hat den Vorteil, dass der lichtleitende Körper sich für den Einsatz in jeglicher Art von KFZ-Beleuchtung eignet, beispielsweise in Blinkern, Lichtscheiben, z.B. Lichtscheiben aus ASA (Acrylester-Styrol-Acrylnitril) Kunststoff, Lichtleitermodulen im Fahrzeug, z.B. Lichtleitermodule für BSM (Blind Spot Monitoring bzw. Totwinkelüberwachung), etc. Der Vorteil einer gekrümmten Ausbildung ist, dass der lichtleitende Körper sich besonders gut für den Einsatz im KFZ-Bereich eignet, da dort die meisten Formen gekrümmt sind, entweder aus Designgründen oder aus technischer Notwendigkeit, beispielsweise bedingt durch optimale Strömungseigenschaften und geringem c_{W}-Wert.

Gemäß einer Ausführungsform weist der lichtleitende Körper eine Abschlussfläche auf, die an eine Bauteileeinheit der Lichtquelle angrenzt, wobei das Flachmaterial zu der Abschlussfläche einen Abstand aufweist. Dies hat den Vorteil, dass die Abschlussfläche den elektrischen Bauteilebereich vom optischen Bereich trennen kann, so dass keine störende Beeinflussung stattfindet. Der Abstand hat den Vorteil, dass Licht, das in der Bauteileeinheit erzeugt werden kann, sich von der Bauteileeinheit in geeigneter Weise in den Lichtleiter einkoppeln lässt bevor das Licht durch zwei im Wesentlichen getrennte optische Kanäle verläuft, die sich aufgrund der Abgrenzung durch das Flachmaterial im lichtleitenden Körper ergeben.

Gemäß einer Ausführungsform ist der lichtleitende Körper an der Abschlussfläche blickdicht abgeschirmt, insbesondere durch eine an der Abschlussfläche angebrachte zweite Flachmaterial und/oder ein Kunststoffgehäuse.

Dies hat den Vorteil, dass mit der Abschlussfläche die Bauteile aus der Bauteileeinheit blickdicht verschlossen werden können, damit ihre Konturen sich nicht im Lichtleiter spiegeln und das Erscheinungsbild stören oder den optischen Pfad des Lichts negativ beeinflussen. Ein zweites Flachmaterial lässt sich leicht an der Abschlussfläche anbringen, beispielsweise aufkleben. Ein Kunststoffgehäuse kann aus einem undurchsichtigen Kunststoff hergestellt werden, beispielsweise durch einfache Spritzgießverfahren, wobei in dem Kunststoffgehäuse sich gleichzeitig verschieden andere Einrichtungen befinden können, beispielsweise zur Bauteilaufnahme oder zum Einsetzen der Lichtquelle, die Licht in den Lichtleiter einkoppelt.

Darüber hinaus wird die Aufgabe gelöst durch eine Rückblickvorrichtung für ein Kraftfahrzeug, mit mindestens einem Lichtleiter, insbesondere mit mindestens einem der zuvor genannten Merkmale, der mindestens einen lichtleitenden Körper, welcher Licht entlang mindestens einer Lichtrichtung leitet; und der mindestens ein insbesondere bandförmiges, optisch wirksames Flachmaterial umfasst, das mit dem in den Körper geleiteten Licht wechselwirkt, um einen Lichteffekt zu erzeugen und der sich dadurch kennzeichnet, dass das Flachmaterial mit seiner Längserstreckungsrichtung entlang der Lichtrichtung des lichtleitenden Körpers in den lichtleitenden Körper und von diesem zumindest quer zur Längserstreckungsrichtung vollständig umgeben eingebettet ist.

Ferner wird die Aufgabe gelöst durch ein Verfahren zum Herstellen eines Lichtleiters für eine Fahrzeugbeleuchtungseinheit, mit den folgenden Verfahrensschritten: Bereitstellen eines Flachmaterials mit einer ersten Oberfläche und einer zweiten Oberfläche, die in entgegengesetzte Richtung zeigt; Hinterspritzen der ersten Oberfläche des Flachmaterials mit einem lichtdurchlässigen Spritzgussmaterial; und Hinterspritzen der zweiten Oberfläche des Flachmaterials mit dem lichtdurchlässigen Spritzgussmaterial, wobei das Flachmaterial mit dem Spritzgussmaterial zu einem Lichtleiter geformt wird, der Licht entlang einer vorgesehenen Lichtrichtung leitet.

Ein solches Herstellungsverfahren hat den Vorteil, dass es mit einfachen Verfahrensschritten realisierbar ist, die mit üblichen Spritzgussanlagen ausführbar sind. Das Verfahren basiert auf zweifachem Hinterspritzen, d.h. einem Hinterspritzen einer ersten Oberfläche und einem Hinterspritzen einer zweiten Oberfläche eines Flachmaterials. Das so hergestellte Produkt zeigt sich durch besondere Robustheit und leichte Handhabbarkeit aus. Es kann beispielsweise in der Fertigungstechnik einfach von einem Roboterarm gegriffen werden ohne dass besondere Fingerfertigkeiten des Roboterarms notwendig wären.

Gemäß einer Ausführungsform bettet das zweifache Hinterspritzen das Flachmaterial vollständig in das lichtdurchlässige Spritzgussmaterial ein. Dies hat den Vorteil, dass jedes so hergestellte Bauteil die gleichen optischen Eigenschaften aufweist. Das Flachmaterial ist damit vor Umwelteinflüssen geschützt und kann auch sehr komplexe Strukturierungen aufweisen, die in dem Spritzgussmaterial vor Abrieb und Witterungsbedingungen geschützt sind.

Schließlich wird die Aufgabe gelöst durch ein Kraftfahrzeug mit mindestens einer Rückblickvorrichtung, insbesondere mit mindestens einem der zuvor genannten Merkmale, und/oder mit mindestens einem Lichtleiter, insbesondere mit mindestens einem der zuvor genannten Merkmale.

Weitere Ausführungsbeispiele werden Bezug nehmend auf die beiliegenden Zeichnungen erläutert. Es zeigen:
- Fig. 1: eine perspektivische Draufsicht eines Lichtleiters für eine Beleuchtungseinheit in einem Außenspiegel eines Fahrzeugs gemäß einer Ausführungsform;
- Fig. 2: eine seitliche Detailansicht des Lichtleiters gemäß Fig. 1; und
- Fig. 3a) bis 3d): schematische Schnittansichten der einzelnen Prozessschritte eines Herstellungsverfahrens eines Lichtleiters für eine Fahrzeugbeleuchtungseinheit.

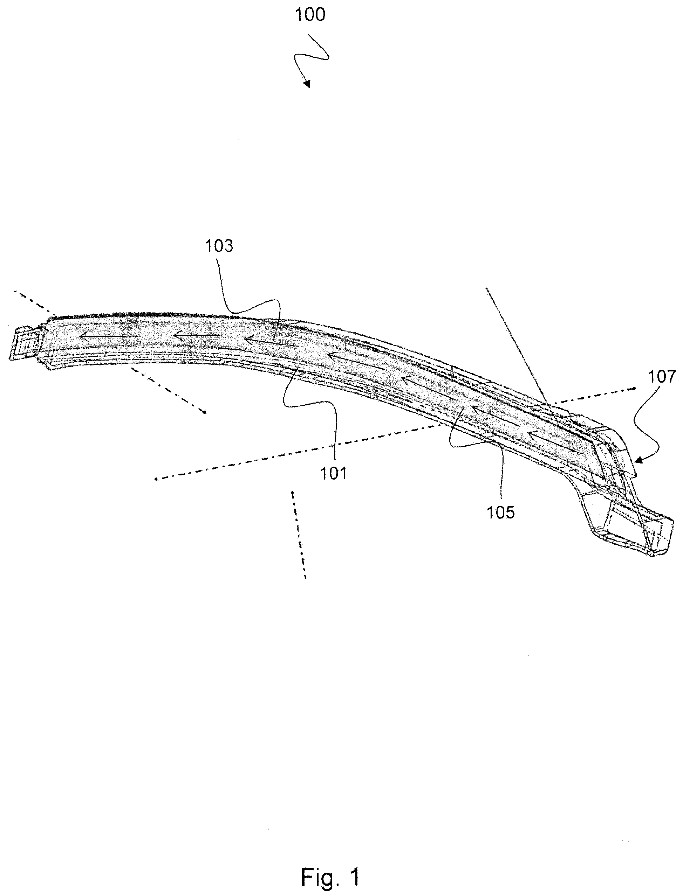

Fig. 1 zeigt eine dreidimensionale Konstruktionszeichnung einer Lichtleiterhälfte mit eingebrachtem Flachmaterial 105 eines Lichtleiters 100 für eine Beleuchtungseinheit in einem Außenspiegel eines Fahrzeugs gemäß einer Ausführungsform in Draufsicht.

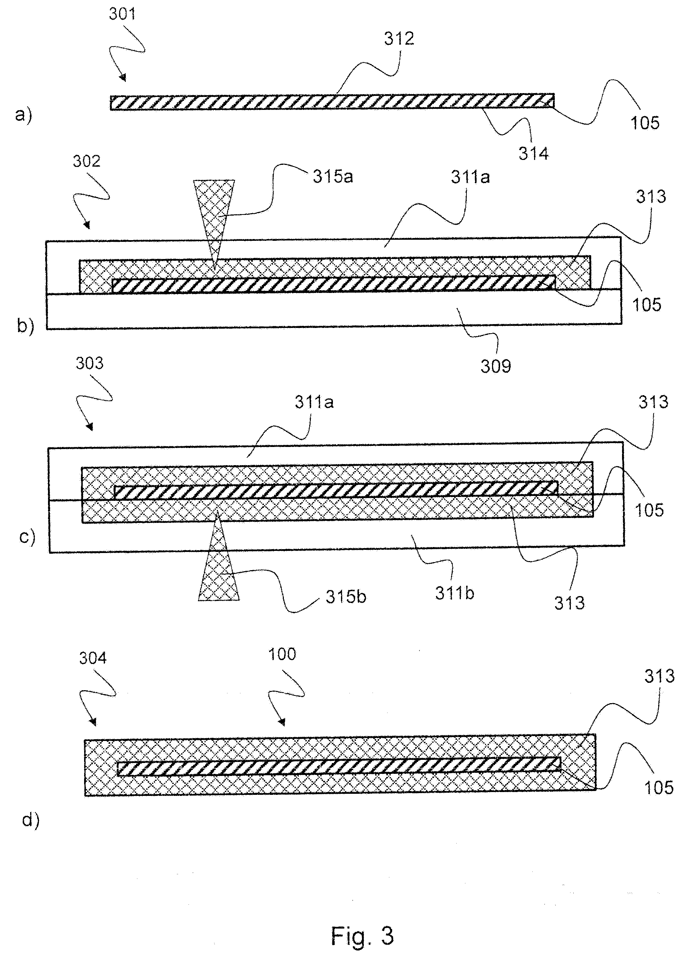

Der Lichtleiter 100 umfasst einen lichtleitenden Körper 101 und ein in den Körper 101 eingebettetes Flachmaterial 105, das in Gänze quer zu seiner Längserstreckungsrichtung von dem Körper 101 umgeben ist. In Fig. 1 ist eine Hälfte des Lichtleiters 100 dargestellt, die auf das Flachmaterial 105 aufgespritzt ist. Der lichtleitende Körper 101 leitet Licht entlang einer Lichtrichtung, die durch die Pfeile 103 beschrieben wird. Der lichtleitende Körper 101 ist entlang der Lichtrichtung 103 auf das Flachmaterial aufgespritzt. Lichtrichtung 103 und Längserstreckungsrichtung des Flachmaterials 105 entsprechen einander. Eine zweite Hälfte, die in Fig. 1 nicht dargestellt ist, kann auf die erste Hälfte mit dem Flachmaterial aufgebracht werden, beispielsweise in einem weiteren Spritzgussvorgang, wie unten zu Fig. 3 beschrieben, um den vollständigen Lichtleiter 100 zu erzeugen. Das Flachmaterial 105 wechselwirkt mit dem in dem Körper 101 geleiteten Licht, um einen Lichteffekt zu erzeugen. Der Lichteffekt kann ein dreidimensionaler Tiefeneffekt sein. Der von dem Flachmaterial erzeugte Lichteffekt ist mit einer Auskopplung des Lichts aus dem lichtleitenden Körper 101 verbunden. Das Licht durchläuft den Körper 101, beispielsweise von einer Einkopplung auf der rechten Seite des Körpers 101 und wird beim Durchlaufen des Körpers 101 abhängig von dem Flachmaterial 105 und seinen Eigenschaften aus dem lichtdurchlässigen Körper 101 ausgekoppelt. Um einen geeigneten Lichteffekt zu erzeugen bzw. um eine gute Auskopplung des Lichts aus dem Körper 101 zu erreichen, kann das Flachmaterial 105 mit einem Aufdruck, beispielsweise einem dreidimensionalen Aufdruck versehen sein. Das Flachmaterial 105 und der lichtleitende Körper 101 können einen unterschiedlichen Brechungsindex aufweisen, beispielsweise aus verschiedenem Material gefertigt sein, um den in Fig. 1 gezeigten dreidimensionalen Lichteffekt zu erzeugen. Beispielsweise kann das Flachmaterial 105 transparent, halbtransparent oder opak ausgebildet sein. Das Flachmaterial 105 kann, wie in Fig. 1 dargestellt, mittig in dem lichtleitenden Körper 101 angebracht sein. Fig. 1 zeigt, dass das Flachmaterial 105 entlang der Lichtrichtung 103 in den lichtleitenden Körper 101 eingebettet ist.

Der lichtleitende Körper 101 kann beispielsweise als ein Spritzgusskörper geformt sein, der auf das Flachmaterial 105 gespritzt ist, beispielsweise mittels eines mehrfachen Flachmaterialhinterspritzungsverfahrens wie unten zu Fig. 3 beschrieben.

Das Flachmaterial 105 kann Aussparungen umfassen (nicht in Fig. 1 dargestellt), durch die das Licht von einer Seite des Lichtleiters 100 hindurch auf eine andere Seite des Lichtleiters 100 und/oder nach außen gelangen kann. Das Flachmaterial 105 kann geeignete Fenster oder Löcher oder dreidimensionale Strukturen aufweisen, an denen das Licht reflektiert und/oder gebrochen wird, um so das durch den Körper 101 geleitete Licht zu homogenisieren.

Der Lichtleiter 100 kann für eine Beleuchtungseinheit in einem Außenspiegel eines Fahrzeugs verwendet werden. Er weist dazu eine längliche Form auf und die Lichtrichtung 103 verläuft entlang einer Hauptachse des Körpers. Der lichtleitende Körper 101 kann insbesondere scheibenförmig ausgebildet sein, um für eine Beleuchtungseinheit eines KFZ genutzt werden zu können. Fig. 1 zeigt, dass der Körper 101 scheibenförmig und gekrümmt ausgebildet ist, um sich so an den Außenspiegel eines KFZ anzupassen.

An der in Fig. 1 dargestellten rechten Seite weist der lichtleitende Körper 101 eine Abschlussfläche 107 auf, die an eine Bauteileeinheit der Lichtquelle angrenzt (nicht dargestellt), in der ein Einsatz für eine Lichtquelle vorgesehen sein kann, um Licht in den Lichtleiter einzukoppeln. Von der Abschlussfläche 107 ist das Flachmaterial 105 in einen in Fig. 1 erkennbaren Abstand angebracht. Die Abschlussfläche 107 kann blickdicht abgeschirmt sein, beispielsweise durch ein an der Abschlussfläche 107 angebrachte zweite Flachmaterial oder ein Kunststoffgehäuse. Damit sind die Bauteile nicht von außen sichtbar und können den Lichteffekt, der sich aufgrund der Einbettung des Flachmaterials in den lichtleitenden Körper ergibt, nicht stören.

Der lichtleitende Körper 101 kann beispielsweise aus klarem, kostengünstigem Kunststoff wie Polycarbonat oder PMMA hergestellt werden.

Der Lichtleiter 100 kann in einer Beleuchtungseinheit in einem Außenspiegel eines Fahrzeugs, beispielsweise in einem Spiegelblinker Verwendung finden. Um einen Spiegelblinker herzustellen kann der Lichtleiter 100 mit einem Blinkergehäuse verbunden werden. Die Verbindung, die dann feuchtigkeitsfest ausgeführt sein kann, kann einen Bauraum einschließen, in dem die Leuchtmittel, z.B. eine oder mehrere LEDs, sowie eine oder mehrere Leiterplatten, metallisierte Bereiche zur Ausbildung von Reflektoren und Lichtleiterstrukturen, die mit dem Lichtleiter 100 verbunden sein können oder nicht verbunden sein können, montiert sein können. Der Lichtleiter 100 ist aber nicht auf Spiegelblinker beschränkt und auch nicht auf modular aufgebaute Blinker beschränkt. Der Lichtleiter 100 kann in vorteilhafter Weise mit einem Mehrfach- (z.B. Zweifach-) Hinterspritzungsverfahren im Spritzguss kostengünstig hergestellt werden.

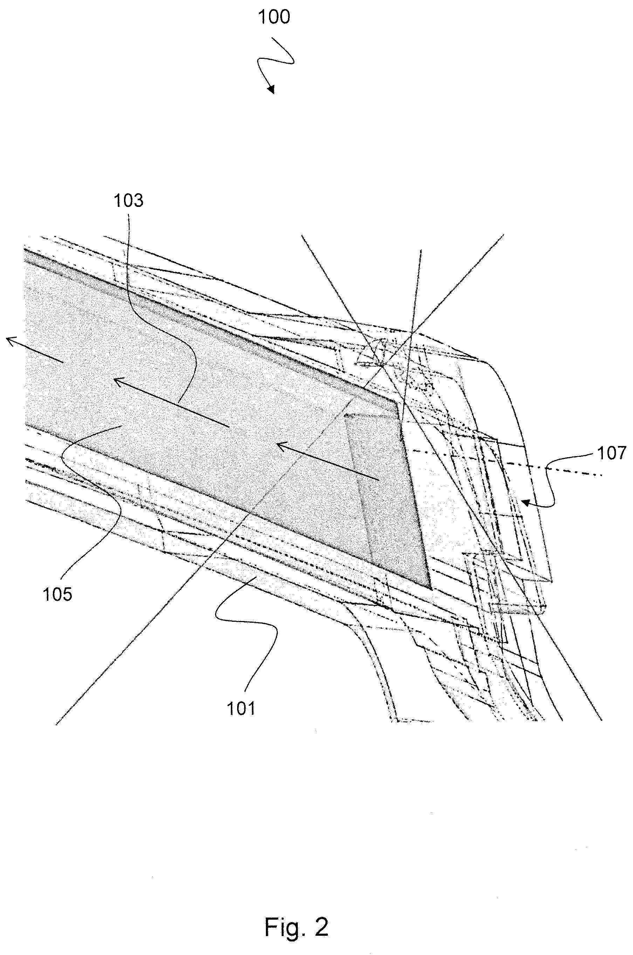

Fig. 2 zeigt einen Ausschnitt aus der dreidimensionalen Konstruktionszeichnung des Lichtleiters 100 aus Fig. 1 in einer Seitenansicht dargestellt.

Der Lichtleiter 100 umfasst den lichtleitenden Körper 101 und das in den Körper 101 eingebettete Flachmaterial 105. In dieser Darstellung ist die mittige Einbettung des Flachmaterials 105 in den Körper 101 erkennbar. Der lichtleitende Körper 101 leitet Licht entlang der vorgesehenen Lichtrichtung, die durch die Pfeile 103 beschrieben wird. Das Flachmaterial 105 ist entlang der Lichtrichtung 103 in den lichtleitenden Körper 101 eingebettet und wechselwirkt mit dem in dem Körper 101 geleiteten Licht, um einen Lichteffekt zu erzeugen. Zu der Abschlussfläche 107 hat das Flachmaterial 105 einen Abstand. In der Abschlussfläche 107 kann eine Halterung vorgesehen sein, um Leuchtmittel, z.B. eine oder mehrere LEDs, aufzunehmen. Die Abschlussfläche 107 kann blickdicht sein, um die Bauteile der Bauteileinheit blickdicht zu verschließen.

Fig. 3a) bis 3d) zeigen schematische Darstellungen der einzelnen Prozessschritte 301, 302, 303, 304 eines Herstellungsverfahrens eines Lichtleiters 100 für eine Fahrzeugbeleuchtungseinheit gemäß einer Ausführungsform.

Das Verfahren umfasst in einem ersten Verfahrensschritt 301 das Bereitstellen 301 eines Flachmaterials 105 mit einer ersten Oberfläche 312 und einer zweiten Oberfläche 314, die in entgegengesetzte Richtung zeigt. Das Flachmaterial 105 kann eine Polycarbonatfolie sein, die die in Fig. 1 und 2 beschriebene dreidimensionale Struktur aufweisen kann. Sie kann z.B. mit einer Farbe bedruckt sein und unterschiedliche Musterung aufweisen, um den oben beschriebenen Lichteffekt zu erzeugen.

Das Verfahren umfasst in einem zweiten Verfahrensschritt 302 das Hinterspritzen der ersten Oberfläche 312 des Flachmaterials 105 mit einem lichtdurchlässigen Spritzgussmaterial 313, beispielsweise aus glasklarem Kunststoff wie Polycarbonat oder PMMA. Das Flachmaterial 105 kann zur Herstellung auf einem Spritzgussträger 309 platziert werden und mit einer ersten Spritzgussform 311a bedeckt werden, die der Negativform der ersten Seite des geformten Formteils entsprechen kann. Mit einer ersten Düse 315a kann Formmaterial bzw. Spritzgussmaterial 313 in die erste Spritzgussform 311a gefüllt werden, um die erste Seite des lichtleitenden Körpers 101, wie beispielsweise in Figuren 1 und 2 beschrieben, zu formen.

Das Verfahren umfasst in einem dritten Verfahrensschritt 303 das Hinterspritzen der zweiten Oberfläche 314 des Flachmaterials 105 mit dem lichtdurchlässigen Spritzgussmaterial 313.

Der Spritzgussträger 309 kann dazu von dem Formkörper aus Flachmaterial 105 und erkaltetem Spritzgussmaterial 313 gelöst werden und eine zweite Spritzgussform 311b kann den Formkörper bedecken, die der Negativform der zweiten Seite des geformten Formteils entsprechen kann. Mit einer zweiten Düse 315b kann Formmaterial bzw. Spritzgussmaterial 313 in die zweite Spritzgussform 311b gefüllt werden, um die zweite Seite des lichtleitenden Körpers 101, wie beispielsweise in Figuren 1 und 2 beschrieben, zu formen.

Nach dem Erkalten des Spritzgussmaterials 313 kann somit in einem vierten Verfahrensschritt 304 bzw. als Ergebnis des dritten Verfahrensschrittes 303 ein Lichtleiter 100 geformt werden, der Licht entlang einer vorgesehenen Lichtrichtung leitet, wie oben im einleitenden Teil und zu den Figuren 1 und 2 näher beschrieben. Das Flachmaterial 105 kann mit diesem Prozess vollständig in den lichtleitenden Körper 101 eingebettet werden.

Die erste Düse 315a und die zweite Düse 315b können als eine einzige Düse realisiert sein. Die erste Spritzgussform 311a und die zweite Spritzgussform 311b können als eine einzige Spritzgussform realisiert sein, etwa wenn ein symmetrischer Aufbau des lichtleitenden Körpers 101 erzielt werden soll.

In einer Ausführungsform des Verfahrens können die zweiten und dritten Verfahrensschritte mehrmals wiederholt werden, um so mehrere Flachmaterialien in den lichtleitenden Körper mittels mehrfacher Hinterspritzung einzubetten.

Sowohl der lichtleitende Körper 101 als auch das Flachmaterial 105 können unterschiedliche Farben aufweisen, um farbiges Licht zu erzeugen oder um verschiedene Farbeffekte zu bewirken. Das Flachmaterial kann mit einem Logo bedruckt sein, beispielsweise einem Herstellerhinweis, wie einem Markenzeichen des Herstellers oder des KFZ-Bauers.

Ein Aspekt der Erfindung umfasst auch ein Computerprogrammprodukt, das direkt in den internen Speicher eines digitalen Computers geladen werden kann und Softwarecodeabschnitte umfasst, mit denen die Verfahrensschritte 301, 302, 303 und 304 des in Fig. 3 beschriebenen Verfahrens ausgeführt werden können, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, ein Flachmaterial 105 mit einer ersten Oberfläche 312 und einer zweiten Oberfläche 314, die in entgegengesetzte Richtung zeigt, bereitzustellen; die erste Oberfläche 312 des Flachmaterials 105 mit einem lichtdurchlässigen Spritzgussmaterial 313 zu hinterspritzen; die zweite Oberfläche 314 des Flachmaterials 105 mit dem lichtdurchlässigen Spritzgussmaterial 313 zu hinterspritzen; und das Flachmaterial 105 mit dem Spritzgussmaterial 313 zu einem Lichtleiter 100 zu formen, der Licht entlang einer vorgesehenen Lichtrichtung leitet. Der Computer kann ein Steuerungsgerät sein, das das Spritzgussverfahren steuert, beispielsweise als Teil einer CNC Maschine. Der Computer kann als ein Chip, ein ASIC, ein Mikroprozessor oder ein Signalprozessor realisiert sein und im Steuerteil einer Spritzgussanlage angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Lichtleiter für eine Fahrzeugbeleuchtungseinheit
- 101:: lichtleitender Körper
- 103:: Lichtrichtung
- 105:: Flachmaterial
- 107:: Abschlussfläche
- 301:: Bereitstellen eines Flachmaterials
- 302:: Hinterspritzen der ersten Oberfläche des Flachmaterials
- 303:: Hinterspritzen der zweiten Oberfläche des Flachmaterials
- 304:: Formen des Flachmaterials mit dem Spritzgussmaterial zu einem Lichtleiter
- 309: Spritzgussträger
- 311a: erste Spritzgussform
- 311b: zweite Spritzgussform
- 313: Spritzgussmaterial
- 312: erste Oberfläche des Flachmaterials
- 314: zweite Oberfläche des Flachmaterials
- 315a:: erste Spritzgussdüse
- 315b:: zweite Spritzgussdüse

## Patentansprüche

1. Lichtleiter (100) für eine Fahrzeugbeleuchtungseinheit, mit
mindestens einem lichtleitenden Körper (101), der Licht entlang mindestens einer Lichtrichtung (103) leitet; und mit mindestens
einem, insbesondere bandförmigen, optisch wirksamen Flachmaterial (105), das mit dem in den Körper (101) geleiteten Licht wechselwirkt, um einen Lichteffekt zu erzeugen, **dadurch gekennzeichnet, dass**
das Flachmaterial (105) mit seiner Längserstreckungsrichtung entlang der Lichtrichtung (103) des lichtleitenden Körpers (101) in den lichtleitenden Körper (101) und von diesem zumindest quer zur Längserstreckungsrichtung vollständig umgeben eingebettet ist.

2. Lichtleiter (100) nach Anspruch 1, **dadurch gekennzeichnet, dass**
das Flachmaterial (105) quer zur Längserstreckungsrichtung mindestens einen Vorsprung, insbesondere mehrere Vorsprünge, wie einen Aufdruck, insbesondere einen dreidimensionalen Aufdruck, umfasst.

3. Lichtleiter (100) nach Anspruch 1 oder 2, **dadurch gekennzeichnet, dass**
das Flachmaterial eine Folie umfasst und/oder dass der Lichteffekt einen dreidimensionalen Tiefeneffekt umfasst.

4. Lichtleiter (100) nach mindestens einem der vorstehenden Ansprüche, **dadurch gekennzeichnet, dass**
der Lichteffekt ein zumindest teilweises Auskoppeln des Lichts aus dem lichtleitenden Körper (101) umfasst.

5. Lichtleiter (100) nach mindestens einem der vorstehenden Ansprüche, **dadurch gekennzeichnet, dass**
das Flachmaterial (105) und der lichtleitende Körper (101) einen unterschiedlichen Brechungsindex aufweisen, insbesondere dass das Flachmaterial (105) zumindest abschnittsweise transparent, halbtransparent und/oder opak ausgebildet ist.

6. Lichtleiter (100) nach mindestens einem der vorstehenden Ansprüche, **dadurch gekennzeichnet, dass**
das Flachmaterial (105) mittig in dem lichtleitenden Körper (101) angeordnet ist.

7. Lichtleiter (100) nach mindestens einem der vorstehenden Ansprüche, **dadurch gekennzeichnet, dass**
der lichtleitende Körper (101) ein Spritzgussteil umfasst, das auf das Flachmaterial (105) gespritzt ist, insbesondere durch mehrfache Flachmaterialhinterspritzung.

8. Lichtleiter (100) nach mindestens einem der vorstehenden Ansprüche, **dadurch gekennzeichnet, dass**
das Flachmaterial (105) mindestens eine quer zur Längserstreckungsrichtung durchgehende Aussparung umfasst, durch die das Licht von einer Seite des Lichtleiters (100) hindurch auf eine andere Seite des Lichtleiters (100) und/oder nach außen gelangen kann.

9. Lichtleiter (100) nach mindestens einem der vorstehenden Ansprüche, **dadurch gekennzeichnet, dass**
das Flachmaterial (105) ausgelegt ist, das durch den Körper (101) geleitete Licht zu homogenisieren und/oder dass
der lichtleitende Körper (101) eine längliche Form aufweist und die Lichtrichtung (103) entlang einer Hauptachse des Körpers (101) verläuft.

10. Lichtleiter (100) nach einem der Ansprüche 1 bis 8, **dadurch gekennzeichnet, dass**
der lichtleitende Körper (101) stab- oder scheibenförmig, insbesondere scheibenförmig und gekrümmt ausgebildet ist.

11. Lichtleiter (100) nach einem der vorstehenden Ansprüche, **dadurch gekennzeichnet, dass**
der lichtleitende Körper (101) eine Abschlussfläche (107) aufweist, die an eine Bauteileeinheit einer Lichtquelle angrenzt, wobei das Flachmaterial (105) zu der Abschlussfläche (107) einen Abstand aufweist.

12. Lichtleiter (100) nach Anspruch 11, **dadurch gekennzeichnet, dass**
der lichtleitende Körper (101) an der Abschlussfläche (107) blickdicht abgeschirmt ist, insbesondere durch ein an der Abschlussfläche (107) angebrachtes zweites Flachmaterial und/oder ein Kunststoffgehäuse.

13. Rückblickvorrichtung für ein Kraftfahrzeug, mit mindestens einem Lichtleiter (100) nach einem der Ansprüche 1 bis 12 der mindestens einen lichtleitenden Körper (101) aufweist, welcher Licht entlang mindestens einer Lichtrichtung (103) leitet; und der mindestens ein insbesondere bandförmiges, optisch wirksames Flachmaterial (105) umfasst, das mit dem in den Körper (101) geleiteten Licht wechselwirkt, um einen Lichteffekt zu erzeugen, **dadurch gekennzeichnet, dass**
das Flachmaterial (105) mit seiner Längserstreckungsrichtung entlang der Lichtrichtung (103) des lichtleitenden Körpers (101) in den lichtleitenden Körper (101) und von diesem zumindest quer zur Längserstreckungsrichtung vollständig umgeben eingebettet ist.

14. Verfahren (301, 302, 303, 304) zum Herstellen eines Lichtleiters (100) für eine Fahrzeugbeleuchtungseinheit, **gekennzeichnet durch** die folgenden Verfahrensschritte:
Bereitstellen (301) eines Flachmaterials (105) mit einer ersten Oberfläche (312) und einer zweiten Oberfläche (314), die in entgegengesetzte Richtung zeigt;
Hinterspritzen (302) der ersten Oberfläche (312) des Flachmaterials (105) mit einem lichtdurchlässigen Spritzgussmaterial (313); und
Hinterspritzen (303) der zweiten Oberfläche (314) des Flachmaterials (105) mit dem lichtdurchlässigen Spritzgussmaterial (313), wobei das Flachmaterial (105) mit dem Spritzgussmaterial (313) zu einem Lichtleiter (100) geformt (304) wird, der Licht entlang einer vorgesehenen Lichtrichtung leitet, **dadurch** gekennzeichnet, dass
das zweifache Hinterspritzen (302, 303) das Flachmaterial (105) vollständig in das lichtdurchlässige Spritzgussmaterial (313) einbettet.

15. Kraftfahrzeug mit mindestens einer Rückblickvorrichtung nach Anspruch 13 und/oder mit mindestens einem Lichtleiter (100) nach einem der Ansprüche 1 bis 12.

## Claims

1. An light guide (100) for a vehicle lighting unit, having at least one light-conducting body (101) which conducts light along at least one light direction (103); and having at least one, in particular band-shaped, optically active flat material (105) which interacts with the light conducted into the body (101) in order to produce a light effect, **characterized in that**
the flat material (105) with its longitudinal extension direction along the direction of light (103) of the light-conducting body (101) is embedded into the light-conducting body (101) and is completely surrounded by the same at least transversely to the direction of longitudinal extent.

2. The light guide (100) according to Claim 1, **characterized in that**
the flat material (105) comprises at least one projection, in particular a plurality of projections, such as an imprint, in particular a three-dimensional imprint, transversely to the direction of longitudinal extent.

3. The light guide (100) according to Claim 1 or 2, **characterized in that**
the flat material comprises a film and/or that the light effect comprises a three-dimensional depth effect.

4. The light guide (100) according to at least one of the preceding claims, **characterized in that**
the light effect comprises an at least partial decoupling of the light from the light-conducting body (101).

5. The light guide (100) according to at least one of the preceding claims, **characterized in that**
the flat material (105) and the light-conducting body (101) have a different refraction index, in particular that the flat material (105) is configured to be transparent, semitransparent and/or opaque at least in sections.

6. The light guide (100) according to at least one of the preceding claims, **characterized in that**
the flat material (105) is arranged centrally in the light-conducting body (101).

7. The light guide (100) according to at least one of the preceding claims, **characterized in that**
the light-conducting body (101) comprises an injection molded part which is injected onto the flat material (105), in particular by means of repeated flat material back injection.

8. The light guide (100) according to at least one of the preceding claims, **characterized in that**
the flat material (105) comprises at least one continuous recess transversely to the direction of longitudinal extent, by means of which recess the light can travel from one side of the light guide (100) through to another side of the light guide (100) and/or externally.

9. The light guide (100) according to at least one of the preceding claims, **characterized in that**
the flat material (105) is designed to homogenize the light conducted through the body (101) and/or that
the light-conducting body (101) has an elongated form and the light direction (103) extends along a main axis of the body (101).

10. The light guide (100) according to any one of Claims 1 to 8, **characterized in that** the light-conducting body (101) is configured to be bar-shaped or disc-shaped, in particular disc-shaped and curved.

11. The light guide (100) according to any one of the preceding claims, **characterized in that** the light-conducting body (101) has an end surface (107) which adjoins a component unit of a light source, wherein the flat material (105) has a distance from the end surface (107).

12. The light guide (100) according to Claim 11, **characterized in that** the light-conducting body (101) is opaquely shielded on the end surface (107), in particular by a second flat material and/or a plastic housing mounted on the end surface (107).

13. A rear viewing device for a motor vehicle, having at least one optical light guide (100) according to any one of Claims 1 to 12 having at least one light-conducting body (101) which conducts light along at least one light direction (103); and which comprises at least one, in particular band-shaped, optically active flat material (105) which interacts with the light conducted into the body (101) in order to produce a light effect, **characterized in that**
the flat material (105) with its longitudinal extension direction along the direction of light (103) of the light-conducting body (101) is embedded into the light-conducting body (101) and is completely surrounded by the same at least transversely to the direction of longitudinal extent.

14. A method (301, 302, 303, 304) for manufacturing a light guide (100) for a vehicle lighting unit, **characterized by** the following method steps:
provision (301) of a flat material (105) having a first surface (312) and a second surface (314) which points in the opposite direction;
back injection (302) of the first surface (312) of the flat material (105) with a translucent injection molded material (313); and
back injection (303) of the second surface (314) of the flat material (105) with the translucent injection molded material (313), wherein the flat material (105) is formed (304) with the injection molded material (313) into an optical light guide (100) which conducts light along a specified light direction, **characterized in that** the two-fold back injection (302, 303) completely embeds the flat material (105) into the translucent injection molded material (313).

15. A motor vehicle having at least one rear viewing device according to Claim 13 and/or having at least one optical light guide (100) according to any one of Claims 1 to 12.

## Revendications

1. Guide de lumière (100) pour une unité d'éclairage de véhicule, ayant au moins
un corps de guidage de lumière (101), qui guide lumière le long d'au moins une direction de lumière (103), et ayant au moins un matériau en feuille (105) optiquement actif, en particulier en forme de bande, qui interagit avec la lumière guidée dans le corps (101) pour produire un effet de lumière, **caractérisé en ce que**
le matériau en feuille (105), avec sa direction d'extension longitudinale le long de la direction de lumière (103) du corps (101) de guidage de lumière, est inséré dans le corps (101) de guidage de lumière, et est complètement entouré de celui-ci au moins transversalement par rapport à la direction d'extension longitudinale.

2. Guide de lumière (100) selon la revendication 1, **caractérisé en ce que**
le matériau en feuille (105) comprend au moins une saillie, en particulier plusieurs saillies, comme une empreinte, en particulier une empreinte tridimensionnelle transversalement par rapport à la direction d'extension longitudinale.

3. Guide de lumière (100) selon la revendication 1 ou 2, **caractérisé en ce que** le matériau en feuille comprend un film et/ou **en ce que** l'effet de lumière comprend un effet de profondeur tridimensionnel.

4. Guide de lumière (100) selon l'une quelconque des revendications précédentes, **caractérisé en ce que**
l'effet de lumière comprend un découplage au moins partiel de la lumière à partir du corps (101) de guidage de lumière.

5. Guide de lumière (100) selon l'une quelconque des revendications précédentes, **caractérisé en ce que**
le matériau en feuille (105) et le corps (101) de guidage de lumière ont un indice de réfraction différent, en particulier **en ce que** le matériau en feuille (105) est réalisé au moins partiellement transparent, semi-transparent et/ou opaque.

6. Guide de lumière (100) selon l'une quelconque des revendications précédentes, **caractérisé en ce que**
le matériau en feuille (105) est disposé au milieu du corps (101) de guidage de lumière.

7. Guide de lumière (100) selon l'une quelconque des revendications précédentes, **caractérisé en ce que**
le corps (101) de guidage de lumière comprend une pièce moulée par injection, qui est moulée par injection sur le matériau en feuille (105), en particulier par contre-injection multiple de matériau en feuille.

8. Guide de lumière (100) selon l'une quelconque des revendications précédentes, **caractérisé en ce que**
le matériau en feuille (105) comprend au moins un évidement traversante transversale par rapport à la direction d'extension longitudinale, à travers laquelle la lumière provenant d'un côté du guide de lumière (100) peut passer jusqu'à l'autre côté du guide de lumière (100), et/ou jusque l'extérieur.

9. Guide de lumière (100) selon l'une quelconque des revendications précédentes, **caractérisé en ce que**
le matériau en feuille (105) est adapté pour homogénéiser la lumière guidée par le corps (101), et/ou **en ce que**
le corps (101) de guidage de lumière a une forme allongée, et la direction de lumière (103) s'étend le long d'un axe principal du corps (101).

10. Guide de lumière (100) selon l'une quelconque des revendications 1 à 8, **caractérisé en ce que** le corps (101) de guidage de lumière est formé en forme de tige ou en forme de disque, en particulier est formé en forme de disque et est incurvé.

11. Guide de lumière (100) selon l'une quelconque des revendications précédentes, **caractérisé en ce que** le corps (101) de guidage de lumière a une surface de fermeture (107) qui est adjacente à une unité de composant d'une source de lumière, dans lequel le matériau en feuille (105) se trouve à une distance de la surface de fermeture (107).

12. Guide de lumière (100) selon la revendication 11, **caractérisé en ce que** le corps (101) de guidage de lumière est protégé de manière opaque au niveau de la surface de fermeture (107), en particulier par un second matériau en feuille et/ou par un boîtier en matière plastique installé au niveau de la surface de fermeture (107).

13. Rétroviseur pour un véhicule automobile, ayant au moins un guide de lumière (100) selon l'une quelconque des revendications 1 à 12, lequel a au moins un corps (101) de guidage de lumière qui guide de la lumière le long d'au moins une direction de lumière (103); et qui comprend au moins un matériau en feuille (105) optiquement actif, en particulier en forme de bande, qui interagit avec la lumière guidée dans le corps (101) pour produire un effet de lumière, **caractérisé en ce que** le matériau en feuille (105), avec sa direction d'extension longitudinale le long de la direction de lumière (103) du corps de guidage de lumière (101), est inséré dans le corps de guidage de lumière (101), et est complètement entouré de celui-ci au moins transversalement par rapport à la direction d'extension longitudinale.

14. Procédé (301, 302, 303, 304) pour fabriquer un guide de lumière (100) pour une unité d'éclairage de véhicule, **caractérisé par** les étapes de procédé consistant à :
fournir (301) un matériau en feuille (105) ayant une première surface supérieure (312) et une seconde surface supérieure (314) passant dans un direction opposée ;
mouler par contre-injection (302) un matériau de moulage par injection translucide (313) au niveau de la première surface supérieure (312) du matériau en feuille (105) ; et
mouler par contre-injection (303) un matériau de moulage par injection translucide (313) au niveau de la seconde surface supérieure (314) du matériau en feuille (105), ledit matériau en feuille (105) avec le matériau de moulage par injection (313) étant formé (304) dans un guide de lumière (100), qui guide lumière le long d'une direction de lumière prévue, **caractérisé en ce que**
le double moulage par contre-injection (302, 303) encastre complètement le matériau en feuille (105) dans le matériau de moulage par injection translucide (313).

15. Véhicule à moteur ayant au moins un dispositif de rétroviseur selon la revendication 13 et/ou ayant au moins un guide de lumière (100) selon l'une quelconque des revendications 1 à 12.
